# EUROPEAN PATENT SPECIFICATION

(11) **EP 4 129 447 B1**
(45) Date of publication and mention of the grant of the patent: **16.04.2025**
(21) Application number: 22187272.4
(22) Date of filing: 27.07.2022
(51) Int. Cl.: B01D 46/00

(54) **PASSIVE PHASE SEPARATOR AT A HEAT EXCHANGER OUTPUT**
PASSIVER PHASENSEPARATOR AN EINEM WÄRMETAUSCHERAUSGANG
SÉPARATEUR DE PHASE PASSIF AU NIVEAU DE LA SORTIE D'UN ÉCHANGEUR DE CHALEUR

(30) Priority: 05.08.2021 US 202163229800 P; 20.08.2021 US 202117407825
(43) Date of publication of application: 08.02.2023
(73) Proprietor: Hamilton Sundstrand Corporation, Charlotte, NC 28217-4578 (US)
(72) Inventor: MANN, John C., Glastonbury, CT (US)
(74) Representative: Dehns

(56) References cited:
- US-A- 3 802 160
- US-A- 5 454 945
- US-A- 5 961 678
- US-A1- 2020 188 829

## Description

### BACKGROUND

Exemplary embodiments pertain to the art of heat exchangers and, in particular, to a passive phase separator at an output of a heat exchanger.

In certain environments, a heat exchanger may be used to revitalize air through condensing, cooling, filtering, and humidifying. In a zero-gravity environment such as the space environment, condensation of water and its separation from the remaining gaseous phase presents a technical challenge. Any water droplets remaining in the gas (e.g., cabin air) may impede the function of various equipment (e.g., soak the filter) or coalesce to form a potential hazard (e.g., within a space vehicle, life support suit, space station, habitat). US 5 961 678 A, US 3 802 160 A, US 5 454 945 A and US 2020/188829 A1 show relevant prior art documents.

### BRIEF DESCRIPTION

A passive phase separator is described herein and defined in claim 1.

Additionally, the two-phase flow in the inner conduit may be blocked from the air flow outlet except through the hydrophobic screen separation device, the flow of liquid may be a flow of water, and the flow of gas may be a flow of air.

Additionally, the hydrophobic screen may form a portion of the inner conduit.

Additionally, the gas flow outlet may be above the hydrophobic screen separation device relative to a direction of the two-phase flow.

Additionally, a direction of the flow of gas in the annulus may be opposite the direction of the two-phase flow within the inner conduit.

Additionally, a direction of the flow of gas in the annulus may be the direction of the two-phase flow within the inner conduit.

A method of fabricating a passive phase separator is also described herein and defined in claim 9.

Additionally, the method may also include arranging the inner conduit to block the two-phase flow in the inner conduit from the gas flow outlet except through the hydrophobic screen separation device. The flow of liquid may be a flow of water and the flow of gas may be a flow of air.

Additionally, the hydrophobic screen may form a portion of the inner conduit.

Additionally, the forming the hydrophobic screen separation device may include configuring a screen support frame to provide structural support to hold the hydrophobic screen in a cylindrical configuration.

Additionally, the method may also include arranging a liquid capture device to capture the flow of liquid from the two-phase flow.

[deleted].

Additionally, the method may also include disposing the gas flow outlet above the hydrophobic screen separation device relative to a direction of the two-phase flow.

Additionally, a direction of the flow of gas in the annulus may be opposite the direction of the two-phase flow within the inner conduit.

Additionally, a direction of the flow of gas in the annulus may be the direction of the two-phase flow within the inner conduit.

### BRIEF DESCRIPTION OF THE DRAWINGS

The following descriptions should not be considered limiting in any way. With reference to the accompanying drawings, like elements are numbered alike:
FIG. 1 is a cross-sectional view of a passive phase separator according to an exemplary embodiment;
FIG. 2 is an additional view cross-sectional view of the passive phase separator shown in FIG. 1;
FIG. 3 is an isometric view of a hydrophobic screen separation device of a passive phase separator according to one or more embodiments;
FIG. 4 is a cross-sectional view of the hydrophobic screen separation device of a passive phase separator shown in FIG. 3; and
FIG. 5 is a cross-sectional view of a passive phase separator according to an exemplary embodiment.

### DETAILED DESCRIPTION

A detailed description of one or more embodiments of the disclosed apparatus and method are presented herein by way of exemplification and not limitation with reference to the Figures.

As previously noted, a heat exchanger may be used to revitalize breathable air in certain environments. As also noted, removing all the water droplets from the heat exchanger before redirecting the air for use in life support may avoid various issues, especially in a zero gravity space environment. Embodiments of the systems and methods detailed herein relate to a passive phase separator at a heat exchanger output. The two phases (i.e., water and air) flow from a condensing heat exchanger to the passive phase separator. As a result of the phase separation, air is allowed to flow to a life support environment (e.g., space suit, space vehicle, habitat) while water is separated and retained for reuse. The passive phase separator according to one or more embodiments may be part of or separate from the heat exchanger system and acts on two-phase flow resulting from the heat exchange process.

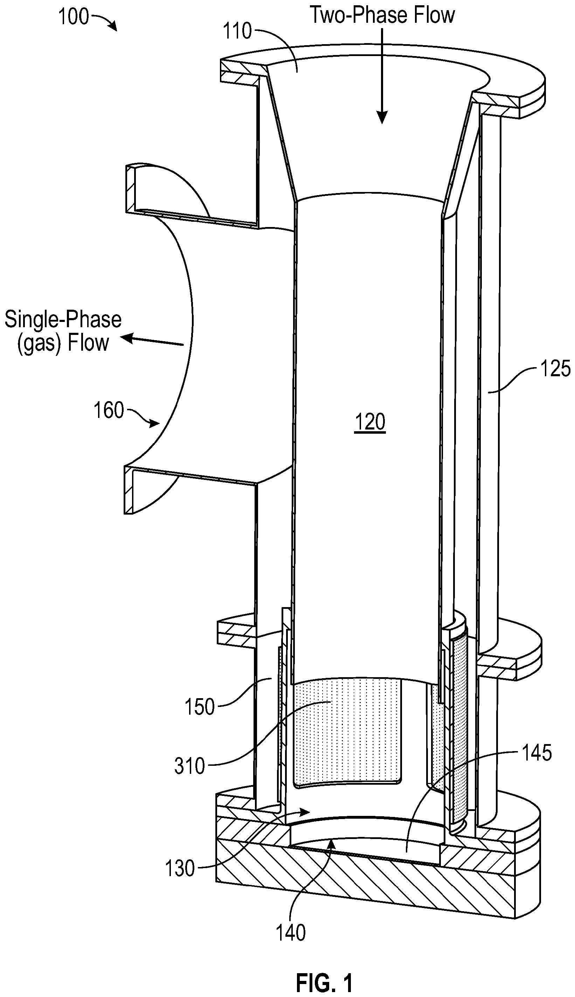

FIG. 1 is a cross-sectional view of a passive phase separator 100 according to an exemplary embodiment. An inlet 110 for a two-phase flow leads into an inner conduit 120. The two-phase flow includes a mix of gas (e.g., air) and liquid (e.g., water). A portion of this inner conduit 120 is made up of a hydrophobic screen 310 of a hydrophobic screen separation device 130. The liquid in the two-phase flow may be water-based or water and is repelled by the hydrophobic screen 310. As a result, the liquid does not go through the hydrophobic screen 310 into the annulus 150 that is formed between the inner conduit 120 and an outer conduit 125. Instead, the liquid is captured by a liquid capture device 140. The liquid capture device 140 may be a rotary separator or other known device and may include a hydrophilic membrane 145 that attracts the water that is or is in the liquid. Capturing the liquid facilitates reusing it as needed.

Unlike the liquid in the two-phase flow, the gas (e.g., air) in the two-phase flow does traverse the hydrophobic screen 310 to reach the annulus 150. This gas then exits the passive phase separator 100 via a gas flow outlet 160. The inner annulus 120 blocks passage of the two-phase flow to the air flow outlet 160. That is, aside from the hydrophobic screen 310, the inner annulus 120 does not include any additional opening into the annulus 150 that leads to the gas flow outlet 160 of the outer conduit 125. Thus, none of the liquid in the two-phase flow can reach the gas flow outlet 160. The gas flow outlet 160 may vent the gas (e.g., air) as part of a life support system.

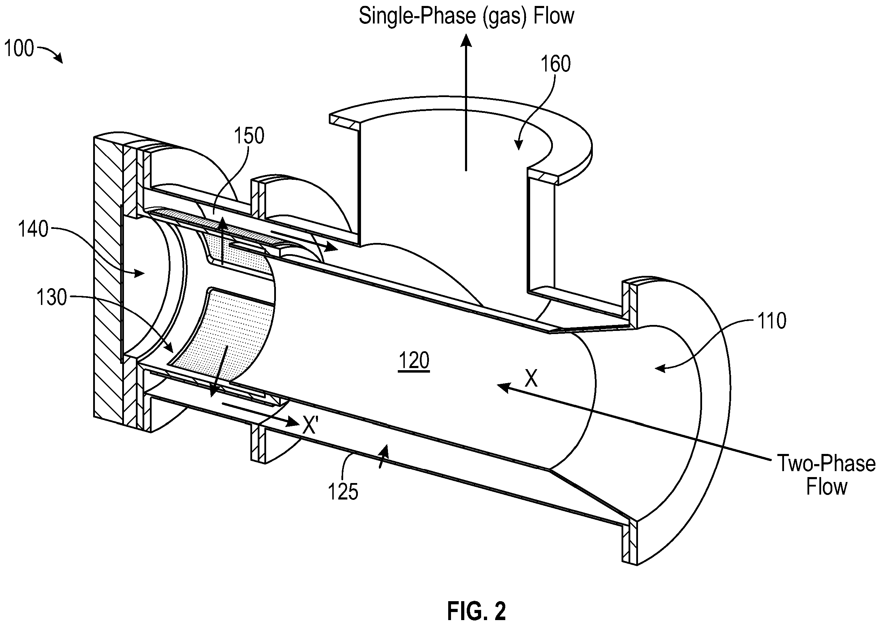

FIG. 2 is an additional view cross-sectional view of the passive phase separator 100 shown in FIG. 1. The annulus 150 between the inner conduit 120 and the outer conduit 125 is shown more clearly in FIG. 2. The arrows indicate the paths that gas in the two-phase flow may take to reach the gas flow outlet 160 of the outer conduit 125. As shown in FIGS. 1 and 2, the hydrophobic screen separation device 130 is below (downstream of) the location of the gas flow outlet 160 with respect to the indicated direction x of the two-phase flow. Thus, as the arrows indicate, the gas in the annulus 150 flows (upstream, relative to the two-phase flow direction x) in a direction *x'* that is opposite the (downstream) two-phase flow direction x.

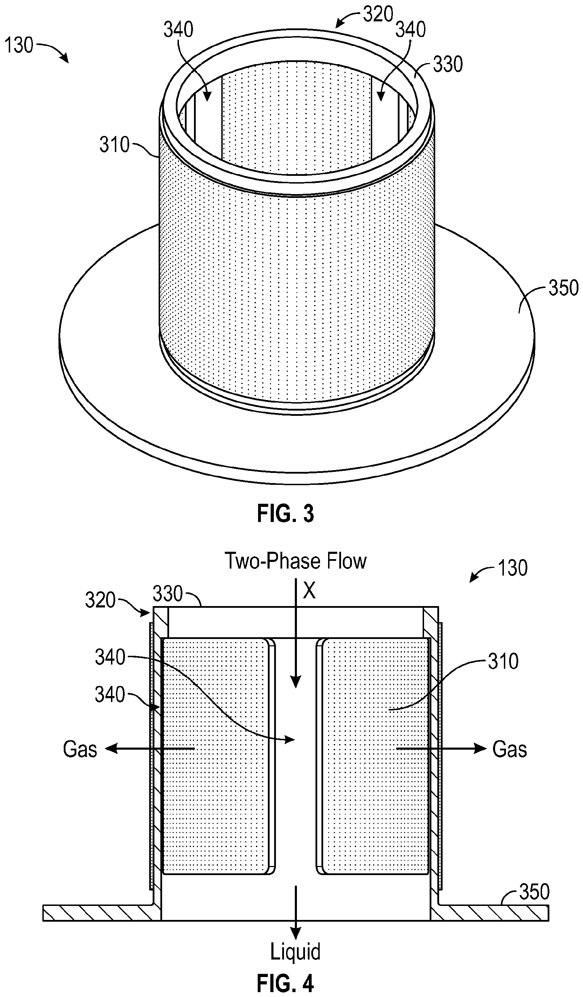

FIG. 3 is an isometric view of a hydrophobic screen separation device 130 of a passive phase separator 100 according to one or more embodiments. As indicated, the hydrophobic screen 310 is structurally supported by a screen support frame 320. The screen support frame 320 includes a ring 330 and support columns 340. The hydrophobic screen 310 forms a cylindrical shape based on the shape of the screen support frame 320 and, specifically, the ring 330. However, other shapes that match a shape of the inner conduit 120 are possible. That is, the shape of the hydrophobic screen 310 must be such that it forms a portion of the inner conduit 120 and does not provide any openings between the inner conduit 120 and the annulus 150, except via the hydrophobic screen 310. The screen support frame 320 is held by an integral mounting flange 350 according to the exemplary embodiment shown in FIG. 3.

FIG. 4 is a cross-sectional view of a hydrophobic screen separation device 130 of a passive phase separator 100 according to one or more embodiments. The cross-sectional view exposes one of the support columns 340 and results from cutting through two others. As the view in FIG. 4 clarifies, only the hydrophobic screen 310 separates the inner conduit 120 and outer conduit 125 between the support columns 340. When the two-phase flow encounters the hydrophobic screen 310, the liquid in the two-phase flow (e.g., water, water-based) cannot pass through the hydrophobic screen 310. The hydrophobic screen 310 may include a hydrophobic coating on a screen structure. The hydrophobic coating may be any known hydrophobic material such as a nano-composite (e.g., manganese oxide polystyrene) or fluoropolymer coating, for example. The screen structure, as well as the screen support frame 320 and integral mounting flange 350, may be stainless steel (e.g., 316 stainless steel) or a nickel-based alloy such as nickel-chromium alloy (e.g., Inconel) or nickel-copper alloy (e.g., Monel), for example. The gas in the two-phase flow (e.g., air) can pass through the hydrophobic screen 310 and exit through the gas flow outlet 160, as indicated in FIG. 2, for example.

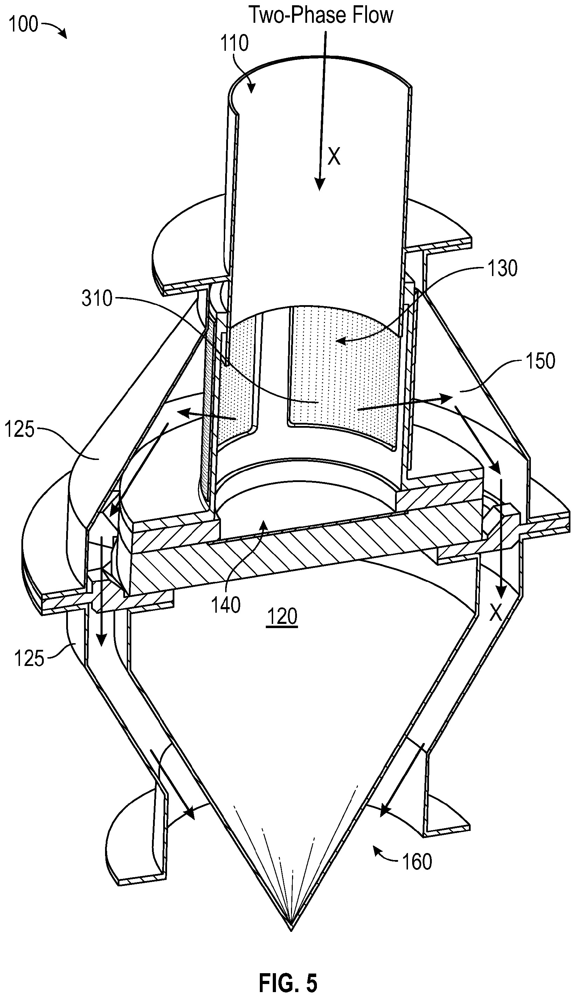

FIG. 5 is a cross-sectional view of a passive phase separator 100 according to an exemplary embodiment. As the exemplary passive phase separator 100 of FIG. 5 indicates, the inner conduit 120 and outer conduit 125 need not be only cylindrical in shape. In addition, unlike the exemplary arrangement shown in FIGS. 1 and 2, the hydrophobic screen separation device 130 is above (upstream of) the gas flow outlet 160 relative to the direction *x* of the two-phase flow. Thus, the gas in the two-phase flow, flowing in the direction *x,* goes through the hydrophobic screen 310 into the annulus 150 and continues in the direction *x* to the gas flow outlet 160.

## Claims

1. A passive phase separator comprising:
an inlet (110) configured to receive two-phase flow into an inner conduit (120);
an outer conduit (125), wherein an annulus is formed between the inner conduit (120) and the outer conduit (125);
a hydrophobic screen separation device (130) configured to prohibit a flow of liquid from the two-phase flow into the annulus while allowing a flow of gas from the two-phase flow into the annulus; and
a gas flow outlet configured to release the flow of gas from the annulus, wherein the hydrophobic screen separation device (130) is below the location of the gas flow outlet relative to a direction (x) of the two-phase flow,
and **characterized by** said hydrophobic screen separation device (130) further comprising a hydrophobic screen (310) that repels the flow of said liquid facilitates the flow of gas through the hydrophobic screen (310) into the annulus, and
said hydrophobic screen separation device (130) further comprising a liquid capture device (140) configured to capture the flow of liquid from the two-phase flow and includes a hydrophilic membrane (145) that attracts the water that is or is in the liquid.

2. The passive phase separator according to claim 1, wherein the two-phase flow in the inner conduit (120) is blocked from the air flow outlet except through the hydrophobic screen separation device (130), the flow of liquid is a flow of water, and the flow of gas is a flow of air.

3. The passive phase separator according to any preceding claim, wherein the hydrophobic screen (310) forms a portion of the inner conduit (120).

4. The passive phase separator according to claim 3, wherein the hydrophobic screen (310) separation device (130) includes a screen support frame configured to provide structural support to hold the hydrophobic screen in a cylindrical configuration.

5. The passive phase separator according to any preceding claim, wherein a direction of the flow of gas in the annulus is opposite the direction of the two-phase flow within the inner conduit (120).

6. The passive phase separator according to any preceding claim, wherein a direction of the flow of gas in the annulus is the direction of the two-phase flow within the inner conduit (120).

7. A method of fabricating a passive phase separator according to one of the preceding claims, the method comprising:
forming an inlet to receive two-phase flow into an inner conduit (120);
arranging an outer conduit (125) to form an annulus between the inner conduit (120) and the outer conduit (125); and **characterized by**
positioning a hydrophobic screen separation device (130) comprising a hydrophobic screen to prohibit a flow of liquid from the two-phase flow into the annulus while allowing a flow of gas from the two-phase flow into the annulus; and
further comprising arranging a liquid capture device (140) to capture the flow of liquid from the two-phase flow, wherein said liquid capture device (140) includes a hydrophilic membrane (145) that attracts the water that is or is in the liquid, and arranging a gas flow outlet to release the flow of gas from the annulus,
disposing the hydrophobic screen separation device (130) below the location of the gas flow outlet relative to a direction (x) of the two-phase flow.

8. The method according to claim 7, further comprising arranging the inner conduit (120) to block the two-phase flow in the inner conduit (120) from the gas flow outlet except through the hydrophobic screen separation device (130), wherein the flow of liquid is a flow of water and the flow of gas is a flow of air.

9. The method according to claim 7 or 8, further comprising forming the hydrophobic screen separation device (130) to include a hydrophobic screen (310) that forms a portion of the inner conduit (120), wherein the hydrophobic screen (310) is configured to repel the flow of liquid and facilitate the flow of gas through the hydrophobic screen (310) into the annulus.

10. The method according to claim 9, wherein the forming the hydrophobic screen separation device (130) includes configuring a screen support frame to provide structural support to hold the hydrophobic screen (310) in a cylindrical configuration.

11. The method according to any of claims 7 to 10, further comprising disposing the gas flow outlet above the hydrophobic screen separation device (130) relative to a direction of the two-phase flow.

12. The method according to claim 11, wherein a direction of the flow of gas in the annulus is opposite the direction of the two-phase flow within the inner conduit (120).

13. The method according to any of claims 7 to 12, wherein a direction of the flow of gas in the annulus is the direction of the two-phase flow within the inner conduit (120).

14. The passive phase separator according to claim 1, wherein the screen (310) is coated with a fluoropolymer coating.

15. The passive phase separator according to claim 1, wherein the screen (310) is coated with a nano-composite.

## Patentansprüche

1. Passiver Phasenseparator, umfassend:
einen Einlass (110), der dazu konfiguriert ist, einen Zweiphasenstrom in eine innere Leitung (120) aufzunehmen;
eine äußere Leitung (125), wobei ein Ringraum zwischen der inneren Leitung (120) und der äußeren Leitung (125) gebildet ist;
eine hydrophobe Siebseparationsvorrichtung (130), die dazu konfiguriert ist, einen Strom von Flüssigkeit aus dem Zweiphasenstrom in den Ringraum zu verhindern, während sie einen Strom von Gas aus dem Zweiphasenstrom in der Ringraum zulässt; und
einen Gasstromauslass, der dazu konfiguriert ist, den Strom von Gas aus dem Ringraum abzulassen, wobei sich die hydrophobe Siebseparationsvorrichtung (130) unterhalb der Stelle des Gasstromauslasses relativ zu einer Richtung (x) des Zweiphasenstroms befindet,
und **dadurch gekennzeichnet, dass** die hydrophobe Siebseparationsvorrichtung (130) ferner ein hydrophobes Sieb (310) umfasst, das den Strom der Flüssigkeit abweist und den Strom von Gas durch das hydrophobe Sieb (310) in den Ringraum ermöglicht, und
wobei die hydrophobe Siebseparationsvorrichtung (130) ferner eine Flüssigkeitsauffangvorrichtung (140) umfasst, die dazu konfiguriert ist, den Strom von Flüssigkeit aus dem Zweiphasenstrom aufzufangen, und eine hydrophile Membran (145) beinhaltet, die das Wasser, das die Flüssigkeit ist oder sich darin befindet, anzieht.

2. Passiver Phasenseparator nach Anspruch 1, wobei der Zweiphasenstrom in der inneren Leitung (120) aus dem Luftstromauslass außer durch die hydrophobe Siebseparationsvorrichtung (130) blockiert ist, der Strom von Flüssigkeit ein Strom von Wasser ist und der Strom von Gas ein Strom von Luft ist.

3. Passiver Phasenseparator nach einem der vorhergehenden Ansprüche, wobei das hydrophobe Sieb (310) einen Abschnitt der inneren Leitung (120) bildet.

4. Passiver Phasenseparator nach Anspruch 3, wobei die hydrophobe Sieb(310)separationsvorrichtung (130) einen Siebstützrahmen beinhaltet, der dazu konfiguriert ist, strukturelle Unterstützung bereitzustellen, um das hydrophobe Sieb in einer zylindrischen Konfiguration zu halten.

5. Passiver Phasenseparator nach einem der vorhergehenden Ansprüche, wobei eine Richtung des Stroms von Gas in dem Ringraum der Richtung des Zweiphasenstroms innerhalb der inneren Leitung (120) entgegengesetzt ist.

6. Passiver Phasenseparator nach einem der vorhergehenden Ansprüche, wobei eine Richtung des Stroms von Gas in dem Ringraum die Richtung des Zweiphasenstroms innerhalb der inneren Leitung (120) ist.

7. Verfahren zur Herstellung eines passiven Phasenseparators nach einem der vorhergehenden Ansprüche, wobei das Verfahren Folgendes umfasst:
Bilden eines Einlasses zum Aufnehmen eines Zweiphasenstroms in eine innere Leitung (120);
Anordnen einer äußeren Leitung (125), um einen Ringraum zwischen der inneren Leitung (120) und der äußeren Leitung (125) zu bilden; und **gekennzeichnet durch**
Positionieren einer hydrophoben Siebseparationsvorrichtung (130), die ein hydrophobes Sieb umfasst, um einen Strom von Flüssigkeit aus dem Zweiphasenstrom in den Ringraum zu verhindern, während ein Strom von Gas aus dem Zweiphasenstrom in der Ringraum zugelassen wird; und
ferner umfassend Anordnen einer Flüssigkeitsauffangvorrichtung (140), um den Strom von Flüssigkeit aus dem Zweiphasenstrom aufzufangen, wobei die Flüssigkeitsauffangvorrichtung (140) eine hydrophile Membran (145) beinhaltet, die das Wasser, das die Flüssigkeit ist oder sich darin befindet, anzieht, und Anordnen eines Gasstromauslasses, um den Strom von Gas aus dem Ringraum abzulassen,
Anordnen der hydrophoben Siebseparationsvorrichtung (130) unterhalb der Stelle des Gasstromauslasses relativ zu einer Richtung (x) des Zweiphasenstroms.

8. Verfahren nach Anspruch 7, ferner umfassend Anordnen der inneren Leitung (120), um den Zweiphasenstrom in der inneren Leitung (120) aus dem Gasstromauslass außer durch die hydrophobe Siebseparationsvorrichtung (130) zu blockieren, wobei der Strom von Flüssigkeit ein Strom von Wasser und der Strom von Gas ein Strom von Luft ist.

9. Verfahren nach Anspruch 7 oder 8, ferner umfassend Bilden der hydrophoben Siebseparationsvorrichtung (130), um ein hydrophobes Sieb (310) zu beinhalten, das einen Abschnitt der inneren Leitung (120) bildet, wobei das hydrophobe Sieb (310) dazu konfiguriert ist, den Strom von Flüssigkeit abzuweisen und den Strom von Gas durch das hydrophobe Sieb (310) in den Ringraum zu ermöglichen.

10. Verfahren nach Anspruch 9, wobei das Bilden der hydrophoben Siebseparationsvorrichtung (130) Konfigurieren eines Siebstützrahmens beinhaltet, um strukturelle Unterstützung bereitzustellen, um das hydrophobe Sieb (310) in einer zylindrischen Konfiguration zu halten.

11. Verfahren nach einem der Ansprüche 7 bis 10, ferner umfassend Anordnen des Gasstromauslasses oberhalb der hydrophoben Siebseparationsvorrichtung (130) relativ zu einer Richtung des Zweiphasenstroms.

12. Verfahren nach Anspruch 11, wobei eine Richtung des Stroms von Gas in dem Ringraum der Richtung des Zweiphasenstroms innerhalb der inneren Leitung (120) entgegengesetzt ist.

13. Verfahren nach einem der Ansprüche 7 bis 12, wobei eine Richtung des Stroms von Gas in dem Ringraum die Richtung des Zweiphasenstroms innerhalb der inneren Leitung (120) ist.

14. Passiver Phasenseparator nach Anspruch 1, wobei das Sieb (310) mit einer Fluorpolymerbeschichtung beschichtet ist.

15. Passiver Phasenseparator nach Anspruch 1, wobei das Sieb (310) mit einem Nanokomposit beschichtet ist.

## Revendications

1. Séparateur de phase passif comprenant :
une entrée (110) configurée pour recevoir un écoulement diphasique dans un conduit intérieur (120) ;
un conduit extérieur (125), dans lequel un espace annulaire est formé entre le conduit intérieur (120) et le conduit extérieur (125) ;
un dispositif de séparation à tamis hydrophobe (130) configuré pour empêcher un liquide provenant de l'écoulement diphasique de s'écouler dans l'espace annulaire tout en permettant à un gaz provenant de l'écoulement diphasique de s'écouler dans l'espace annulaire ; et
une sortie d'écoulement de gaz configurée pour libérer l'écoulement de gaz provenant de l'espace annulaire, le dispositif de séparation à tamis hydrophobe (130) étant situé en dessous de l'emplacement de la sortie d'écoulement de gaz par rapport à une direction (x) de l'écoulement diphasique,
et **caractérisé en ce que** ledit dispositif de séparation à tamis hydrophobe (130) comprend en outre un tamis hydrophobe (310) qui repousse l'écoulement dudit liquide, facilite l'écoulement du gaz à travers le tamis hydrophobe (310) dans l'espace annulaire, et
ledit dispositif de séparation à tamis hydrophobe (130) comprenant en outre un dispositif de capture de liquide (140) configuré pour capturer l'écoulement de liquide provenant de l'écoulement diphasique et comprenant une membrane hydrophile (145) qui attire l'eau qui est ou est dans le liquide.

2. Séparateur de phase passif selon la revendication 1, dans lequel l'écoulement diphasique dans le conduit intérieur (120) est empêché à partir de la sortie d'écoulement d'air sauf à travers le dispositif de séparation à tamis hydrophobe (130), l'écoulement de liquide est un écoulement d'eau, et l'écoulement de gaz est un écoulement d'air.

3. Séparateur de phase passif selon une quelconque revendication précédente, dans lequel le tamis hydrophobe (310) forme une partie du conduit intérieur (120).

4. Séparateur de phase passif selon la revendication 3, dans lequel le dispositif de séparation (130) à tamis hydrophobe (310) comprend un cadre de support de tamis configuré pour fournir un support structurel destiné à maintenir le tamis hydrophobe dans une configuration cylindrique.

5. Séparateur de phase passif selon une quelconque revendication précédente, dans lequel une direction de l'écoulement de gaz dans l'espace annulaire est opposée à la direction de l'écoulement diphasique à l'intérieur du conduit intérieur (120).

6. Séparateur de phase passif selon une quelconque revendication précédente, dans lequel une direction de l'écoulement de gaz dans l'espace annulaire est la direction de l'écoulement diphasique à l'intérieur du conduit intérieur (120).

7. Procédé de fabrication d'un séparateur de phase passif selon l'une des revendications précédentes, le procédé consistant à :
former une entrée pour recevoir l'écoulement diphasique dans un conduit intérieur (120) ;
disposer un conduit extérieur (125) pour former un espace annulaire entre le conduit intérieur (120) et le conduit extérieur (125) ; et **caractérisé par**
la mise en place d'un dispositif de séparation à tamis hydrophobe (130) comprenant un tamis hydrophobe pour empêcher un liquide provenant de l'écoulement diphasique de s'écouler dans l'espace annulaire tout en permettant à un gaz provenant de l'écoulement diphasique de s'écouler dans l'espace annulaire ; et
comprenant également l'agencement d'un dispositif de capture de liquide (140) pour capturer l'écoulement de liquide provenant de l'écoulement diphasique, ledit dispositif de capture de liquide (140) comprenant une membrane hydrophile (145) qui attire l'eau qui est ou est dans le liquide, et l'agencement d'une sortie d'écoulement de gaz pour libérer l'écoulement de gaz de l'espace annulaire,
la mise en place du dispositif de séparation à tamis hydrophobe (130) en dessous de l'emplacement de la sortie d'écoulement de gaz par rapport à une direction (x) de l'écoulement diphasique.

8. Procédé selon la revendication 7, comprenant également l'agencement du conduit intérieur (120) de façon à empêcher l'écoulement diphasique dans le conduit intérieur (120) à partir de la sortie d'écoulement de gaz sauf à travers le dispositif de séparation à tamis hydrophobe (130), l'écoulement de liquide étant un écoulement d'eau et l'écoulement de gaz étant un écoulement d'air.

9. Procédé selon la revendication 7 ou 8, comprenant également la formation du dispositif de séparation à tamis hydrophobe (130) de façon à inclure un tamis hydrophobe (310) qui forme une partie du conduit intérieur (120), le tamis hydrophobe (310) étant configuré pour repousser l'écoulement de liquide et faciliter l'écoulement de gaz à travers le tamis hydrophobe (310) jusque dans l'espace annulaire.

10. Procédé selon la revendication 9, dans lequel la formation du dispositif de séparation à tamis hydrophobe (130) comprend la configuration d'un cadre de support de tamis pour fournir un support structurel destiné à maintenir le tamis hydrophobe (310) dans une configuration cylindrique.

11. Procédé selon l'une quelconque des revendications 7 à 10, comprenant également la mise en place de la sortie d'écoulement de gaz au-dessus du dispositif de séparation à tamis hydrophobe (130) par rapport à une direction de l'écoulement diphasique.

12. Procédé selon la revendication 11, dans lequel une direction de l'écoulement de gaz dans l'espace annulaire est opposée à la direction de l'écoulement diphasique à l'intérieur du conduit intérieur (120).

13. Procédé selon l'une quelconque des revendications 7 à 12, dans lequel une direction de l'écoulement de gaz dans l'espace annulaire est la direction de l'écoulement diphasique à l'intérieur du conduit intérieur (120).

14. Séparateur de phase passif selon la revendication 1, dans lequel le tamis (310) est revêtu d'un revêtement en fluoropolymère.

15. Séparateur de phase passif selon la revendication 1, dans lequel le tamis (310) est revêtu d'un nano-composite.
